# DEMANDE DE BREVET EUROPEEN

(11) **EP 4 850 780 A1**
(43) Date de publication de la demande: **09.12.2026**
(21) Numéro de dépôt: 25180919.0
(22) Date de dépôt: 05.06.2025
(51) Int. Cl.: B01D 29/03, B01D 29/52, B01D 29/96, B01D 35/02, E03F 5/14, F16L 55/24

(54) **PIÈGE À DÉCHETS SOLIDES POUR SYSTÈME DE COLLECTE D'EAUX USÉES**

(71) Demandeur: Sikora, Bernard, 69890 La Tour de Salvagny (FR); Laplace, Dominique, 05000 Gap (FR)
(72) Inventeur: Sikora, Bernard, 69890 La Tour de Salvagny (FR); Laplace, Dominique, 05000 Gap (FR)
(74) Mandataire: LLR

(57) **Abrégé**

L'invention concerne un dispositif de retenue de déchets solides d'un réseau de collecte d'eaux usées, comprenant une chambre technique (1) équipée d'un caniveau central (4) connecté fluidiquement à un collecteur d'assainissement amont (2) et comprenant au moins un casier amovible (10) muni d'au moins un tamis, le casier amovible (10) étant disposé de manière à filtrer des eaux usées provenant du caniveau central (4) et passant à travers les mailles du tamis, les déchets solides restant retenus à l'intérieur du casier (10) et en cas de colmatage du tamis, le dispositif comprend une vanne de délestage à axe horizontal (25) pour by-passer le système en cas de montée anormale du niveau d'eau en amont au-delà d'une valeur seuil.

## Description

### Domaine technique

L'invention concerne les systèmes et réseaux de collecte d'eaux usées, plus particulièrement la gestion des déchets solides dans les eaux usées.

### État de la technique

Un système d'assainissement est composé par un réseau de collecte d'eaux usées qui collecte et transporte les eaux usées vers une station d'épuration qui, elle, les traite et les rejette ensuite dans le milieu naturel. Le réseau de collecte est majoritairement composé de canalisations gravitaires, de postes de pompage et de canalisations de refoulement. Il est conçu pour véhiculer et traiter des eaux usées modérément chargées en déchets solides, en particulier les matières fécales et papiers hygiéniques provenant des toilettes.

Lorsque les eaux usées et les eaux pluviales sont collectées dans des réseaux distincts, le système d'assainissement est dit séparatif. Dans ce cas, les déchets sanitaires se retrouvent dans les réseaux de collecte d'eaux usées. La généralisation de l'utilisation des lingettes, jetées à tort dans les toilettes, conduit à retrouver ces nouveaux déchets sanitaires dans les systèmes d'assainissement qui n'ont pas été conçus pour cela. De fait, cela engendre de nouveaux problèmes car, contrairement au papier hygiénique, ces lingettes fabriquées à base de fibres synthétiques résistantes ne se désagrègent pas et se révèlent être un véritable fléau pour les systèmes d'assainissement. Elles s'accumulent et peuvent former des agrégats qui obstruent les canalisations. Ces lingettes étant filandreuses, elles peuvent aussi paralyser les pompes de relevage, colmater les dégrilleurs et contrarier les systèmes de traitement d'eaux usées des stations d'épuration. Les obstructions répétées liées à ces déchets solides pénalisent les collectivités en termes de coûts de maintenance et mettent en péril le bon fonctionnement des réseaux avec, pour conséquences des débordements d'eaux usées dommageables pour les riverains et pour l'environnement.

Lorsque les eaux usées et les eaux pluviales sont collectées dans un même réseau, le système d'assainissement est dit unitaire. Dans ce cas, les déchets sanitaires précédemment évoqués se retrouvent dans les réseaux, mélangés avec des sables, des graviers et des détritus, qui peuvent rentrer par les avaloirs installés à chaque coin de rue pour permettre l'engouffrement des eaux de ruissellement. Ces déchets solides ont du mal à être transportés par l'écoulement et forment des dépôts dans les canalisations. Lors d'événements pluvieux qui génèrent des débits qui dépassent la capacité de référence de la station d'épuration, la remise en mouvement de ces dépôts et l'activation des déversoirs d'orage conduisent ces eaux chargées dans le milieu naturel, contribuant à le polluer durablement. Il convient donc de curer préventivement ces dépôts, d'une part pour maintenir la section de passage des ouvrages et, d'autre part, pour protéger l'environnement. Ces curages récurrents représentent une lourde charge financière pour les collectivités.

Il existe sur le marché des filets d'interception des macrodéchets qui se placent à l'aval des réseaux pluviaux et des déversoirs d'orage mais leur fonction est de protéger le milieu naturel et non le système d'assainissement.

Il existe aussi des paniers dégrilleurs positionnés dans les postes de relevage. Ces paniers ont une taille limitée compte tenu de l'espace restreint disponible dans la fosse de pompage. Leur dimension est alors inadaptée face aux volumes de lingettes à retenir, ce qui entraîne une fréquence de nettoyage trop élevée et conduit bien souvent les exploitants à les enlever.

Il existe également des broyeurs qui pourraient théoriquement fragmenter les lingettes, mais la structure filandreuse de ces dernières est trop résistante et elles finissent par s'enrouler autour des lames, les rendant inefficaces.

Face à cette nouvelle problématique, les solutions actuelles sont inadéquates, mettant en évidence un retard technologique en matière de gestion de ces nouveaux déchets. Aucun système efficace n'a encore été conçu pour protéger les canalisations, les pompes, les dégrilleurs et autres équipements de traitement des eaux usées, contre les lingettes.

En ce qui concerne les dépôts dans les réseaux d'assainissement unitaires, il existe un dispositif appelé piège à charriage pour intercepter et retenir spécifiquement les sables et graviers transportés par l'écoulement. Cependant, la largeur d'ouverture de ces pièges est fixe, et donc ne s'adapte pas aux conditions d'écoulement, notamment aux contraintes de cisaillement au fond, contrastées qui s'établissent par temps sec et par temps de pluie dans ces ouvrages. L'efficacité de ce dispositif s'en ressent et pourrait donc être encore améliorée.

Il existe un système de vanne à axe horizontal qui permet de stocker l'eau en amont et de la délester après basculement de la vanne. La finalité de cette vanne est triple : elle peut servir à chasser les dépôts formés dans le réseau aval, elle peut servir de rehausse mobile d'un déversoir d'orage et elle peut aussi servir de vanne de sécurité hydraulique qui bascule et libère l'écoulement vers l'aval. Il s'avère que le fonctionnement de ce type de vanne est très sensible à son étanchéité. En effet, lorsqu'elle commence légèrement à basculer, elle laisse alors échapper une partie des effluents stockés, ce qui fait redescendre le niveau d'eau amont et referme la vanne. Dans ces conditions, la vanne ne s'ouvre pas franchement et l'effet attendu de délestage n'est pas obtenu. Ce défaut de fonctionnement doit donc aussi être amélioré.

L'invention a pour but de fournir un dispositif de piégeage de déchets solides présents dans les eaux usées, destiné à prévenir les obstructions des réseaux de collecte des systèmes d'assainissement ainsi qu'à limiter l'impact environnemental des rejets.

### Résumé de l'invention

A cet effet l'invention a pour objet un dispositif de retenue de déchets solides d'un réseau de collecte d'eaux usées, comprenant une chambre technique équipée d'un caniveau central connecté fluidiquement à un collecteur d'assainissement amont et comprenant au moins un casier amovible muni d'au moins un tamis, le casier amovible étant disposé de manière à filtrer des eaux usées provenant du caniveau central et passant à travers les mailles du tamis, les déchets solides restant retenus à l'intérieur du casier.

Ainsi, le dispositif de retenue est conçu pour piéger les déchets solides dans les réseaux d'assainissement avant qu'ils ne provoquent des nuisances aux infrastructures et dans les milieux récepteurs. Ces pièges à déchets solides sont stratégiquement positionnés en amont des points d'accumulation ou d'obstructions récurrentes et des installations sensibles comme les pompes de relevage, les dégrilleurs et autres systèmes de traitement des eaux usées. En interceptant les déchets solides, ils évitent les dysfonctionnements précédemment exposés et leurs coûts de maintenance associés. Ils se placent également dans les déversoirs d'orage limitant ainsi la dispersion des déchets solides dans la nature lors des pluies.

En s'installant en amont des points sensibles des réseaux d'assainissement, cette invention permet de capter et d'extraire les déchets solides efficacement et en toute sécurité, réduisant ainsi considérablement les risques d'obstruction et de dysfonctionnement des ouvrages et des équipements. Cette solution permet non seulement de diminuer la pénibilité et les coûts de maintenance (on retire les casiers amovibles régulièrement pour évacuer les déchets solides retenus), mais aussi de protéger les milieux récepteurs contre la pollution liée à ces déchets. Ces pièges à déchets solides offrent l'avantage d'une conception simple qui ne nécessite pas d'énergie pour fonctionner.

Suivant d'autres caractéristiques optionnelles du dispositif de retenue prises seules ou en combinaison :
- le tamis du casier est réalisé avec des matériaux résistants à la corrosion et à l'abrasion ainsi qu'à la poussée de l'eau et dont la maille est adaptée aux dimensions des déchets solides à piéger, de préférence en tôle perforée, en grillage, ou en filets souples,
- le casier est amovible, positionné dans des glissières de guidage et comprend des anneaux de levage placés sur le casier de manière à pouvoir le manipuler,
- le dispositif de retenue comprend une vanne de délestage à axe horizontal comprenant un volet basculant configuré pour laisser passer des eaux usées sans passage par le casier lorsque le niveau d'eau à l'intérieur du dispositif de retenue dépasse une hauteur seuil,
- le volet basculant comprend des membranes aimantées et des aimants placés sur un encadrement de la vanne de délestage, une force de retenue membranes aimantées et des aimants étant calculée pour permettre une ouverture de la vanne lorsqu'une poussée hydraulique contre le volet basculant est supérieure à une valeur seuil,
- le dispositif de retenue comprend un piège à charriage dimensionné pour emprisonner des impuretés déposées au fond des eaux usées par gravité, par exemple du sable ou du gravier, le pièce à charriage comprenant une ouverture munie d'un volet de régulation dont le déplacement entre une position d'ouverture du pièce à charriage et une position de fermeture du pièce à charriage est contrôlé par un flux d'eaux usées dans le dispositif de retenue,
- le volet de régulation est mobile dans des glissières et est relié à un masque hydromécanique dont le déplacement induit un déplacement du volet de régulation, le masque hydromécanique étant mobile d'une position de fermeture du piège à charriage à une position d'ouverture du piège à charriage par l'intermédiaire d'une poussée hydraulique contre le masque hydromécanique et mobile d'une position d'ouverture du piège à charriage à une position de fermeture du piège à charriage par l'effet d'un lest porté par le masque hydromécanique, et
- le dispositif de retenue comprend un conduit de détournement d'écoulement d'eaux usées comprenant au moins une vanne de sectionnement dimensionnée pour permettre un détournement d'un flux d'eaux usées du caniveau central de manière à empêcher un passage des eaux usées au travers du casier.

L'invention a également pour objet un réseau de collecte d'eaux usées comprenant un dispositif de retenue selon l'une quelconque des revendications précédentes disposé en amont de points d'obstructions ou d'organes choisis parmi une pompe, un dégrilleur et/ou une installation de traitement d'eaux usées.

Le dispositif de retenue peut être disposé dans un déversoir d'orage.

### Brève description des figures

L'invention sera mieux comprise à la lecture de la description qui va suivre donnée uniquement à titre d'exemple et faite en se référant aux dessins annexés dans lesquels :
La [Fig. 1] est une vue en coupe du dispositif de retenue selon l'invention selon un plan de coupe B-B de la figure 2,
La [Fig. 2] est une vue en coupe du dispositif de retenue selon l'invention selon un plan de coupe A-A de la figure 1,
La [Fig. 3] est une vue en perspective d'un dispositif de régulation de l'ouverture d'un piège à charriage d'un dispositif de retenue selon l'invention,
La [Fig. 4] est une vue en perspective d'une vanne hydromécanique de délestage à basculement horizontal d'un dispositif de retenue selon l'invention, et
Les [Fig. 5] est une vue de volets de fermeture partielle de casiers pour régulation en déversoir d'orage.

### Description détaillée

Les exemples décrits ci-dessus sont uniquement donnés à titre d'exemples illustratifs et ne sauraient être considérés comme limitant le cadre général de la présente invention.

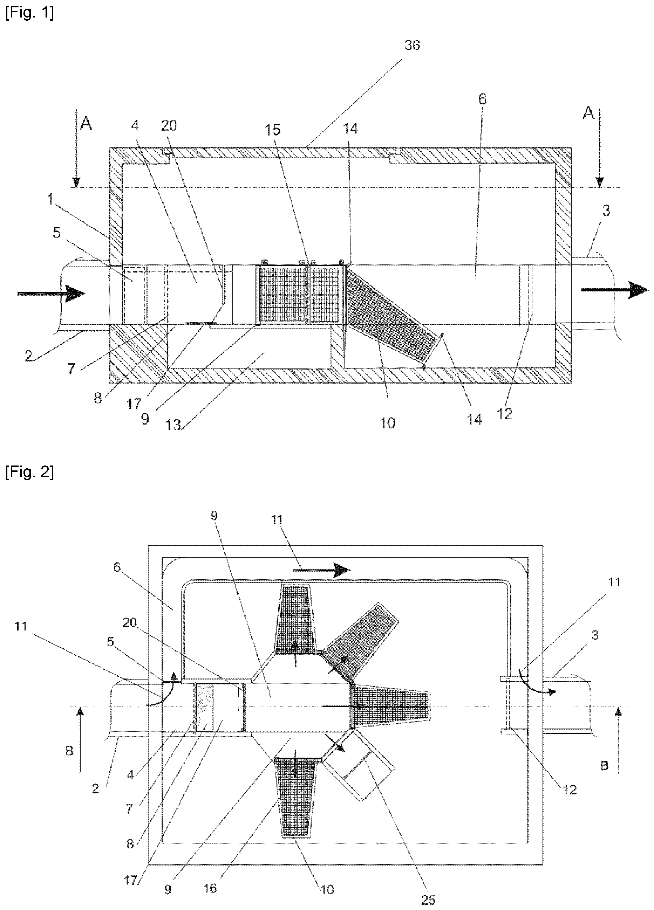

On se réfère désormais à la figure 1 illustrant un dispositif de retenue de déchets solides d'un réseau de collecte d'eaux usées.

Le dispositif comprend une chambre technique 1 dans laquelle arrive un collecteur d'assainissement amont2. La chambre technique 1 est équipée d'un caniveau central 4 pour canaliser les effluents et comporte, en fonction du débit et du flux de déchets solides à intercepter, un ou plusieurs casiers amovibles 10(quatre sur la figure 2) équipés de tamis. Le fonctionnement du piège repose sur la filtration des eaux usées qui passent à travers les tamis, les déchets solides restant retenus à l'intérieur du ou des casiers 10. Les figures 16 illustrent le sens de circulation des eaux usées dans les casiers 10.

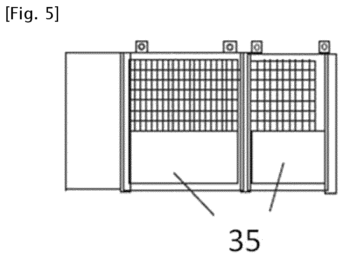

Les tamis des casiers 10 peuvent être réalisés en tôle perforée, en grillage, ou être constitués par des filets souples, avec des matériaux résistants à la corrosion et à l'abrasion ainsi qu'à la poussée de l'eau, même lorsqu'ils sont pleins. Leur maille est adaptée aux dimensions des déchets solides à piéger. Comme cela est visible sur la figure 2, les casiers 10 sont disposés à intervalles réguliers sur le pourtour d'une extrémité terminale du caniveau central 4. Comme cela est visible sur la figure 5, les casiers 10 peuvent comprendre des volets de fermeture partielle 35 créant un seuil pour une régulation en déversoir d'orage.

Les casiers 10 peuvent être retirés depuis la surface pour récupérer les déchets accumulés, permettant aux exploitants de travailler dans de bonnes conditions de sécurité. Pour cela, les casiers 10 sont amovibles, installés dans des glissières de guidage 15 et peuvent être soulevés depuis l'extérieur grâce à des anneaux de levage 14 positionnés pour faciliter leur extraction, leur vidage et leur remise en place. Une trappe d'accès 36 permet d'avoir accès à l'intérieur du dispositif de retenue.

Le dispositif de retenue comprend également un collecteur d'assainissement aval 3 permettant l'évacuation d'eaux usées de ce dernier.

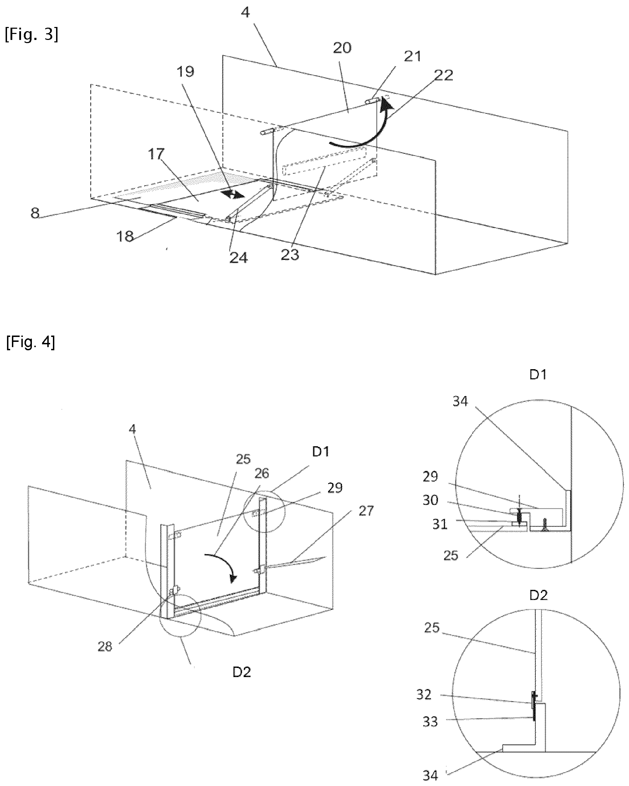

Une vanne hydromécanique de délestage de type volet basculant (le volet basculant 25 est visible sur les figures 2 et 4), peut être installée pour permettre à l'écoulement de contourner les casiers 10 dans le cas où ils seraient colmatés et si le niveau d'eau amont monte anormalement au niveau de la cote de basculement du volet 25.

Avantageusement, l'étanchéité de la vanne hydromécanique est assurée par l'utilisation d'aimants 31 placés au point bas et au point haut de la vanne. Les aimants 31 utilisés au point haut sont solidaires de l'encadrement 34 du volet 25 par l'intermédiaire d'un support 29 et viennent prendre appui sur le haut de la vanne. Un ressort d'amortissement30 (ou un silent bloc) permet d'amortir le volet 25 lors de sa phase de fermeture. Le système d'aimantation du point bas peut être constitué par une membrane aimantée 33, solidaire du volet 25 par l'intermédiaire d'une butée de fermeture32. Dans son fonctionnement le bas de la membrane aimantée 33 vient au contact de l'encadrement 34 et assure ainsi l'étanchéité. La retenue des aimants est calculée pour permettre une ouverture franche de la vanne dès lors que la poussée hydraulique devient supérieure à leur résistance. On permet ainsi le délestage du dispositif de retenue comme expliqué ci-dessus. La flèche 26 illustre le sens de pivotement du volet 25 de la vanne de délestage, rotation autour d'un axe de rotation 28. Des butées d'appui à l'ouverture 27 peuvent être prévues de manière à limiter la course du volet basculant 25 et pour faciliter son retour en position fermée de la vanne de délestage.

Pour les dispositifs de retenue installés sur les réseaux unitaires, le dispositif peut être complété avec un piège à charriage, couvert par au moins un panneau de couverture 9, spécialement aménagé en radier et comprenant une fosse de stockage 13 pour intercepter et retenir les déchets lourds tels que les sables et graviers transportés par l'écoulement. Dans le cadre de cette invention, il est proposé qu'une ouverture transversale 8 du piège à charriage puisse s'adapter aux conditions de débit pour améliorer sa sélectivité, grâce à un volet de régulation 17 qui coulisse dans des glissières 18 pour s'ouvrir sous l'action de la poussée de l'eau sur un masque hydromécanique 20 par temps de pluie et se referme au moins partiellement sous l'effet d'un lest 23 par temps sec, comme cela est illustré sur la figure 3. La flèche 19 illustre quant à elle la direction de déplacement du volet de régulation. Le masque hydromécanique 20 peut être monté mobile en rotation autour d'un axe de rotation 21 (la flèche 22 illustre un sens de pivotement du masque hydromécanique 20). Le masque hydromécanique 20 et le volet de régulation 17 peuvent être reliés l'un à l'autre par des barres de raccordement 24.

Pour faciliter les interventions de maintenance, un conduit de détournement de l'écoulement 6 permet de mettre le dispositif de retenue à sec, par exemple grâce à l'activation manuelle de vannes de sectionnement 5 (vanne de sectionnement by-pass du caniveau central), 7 (vanne de sectionnement du collecteur amont) et 12 (vanne de sectionnement du collecteur aval).Les flèches 11 illustrent un sens de circulation des eaux dans le conduit de détournement de l'écoulement 6.

L'invention n'est pas limitée aux modes de réalisation présentés et d'autres modes de réalisation apparaîtront clairement à la personne du métier.

### Liste de références

1 : ouvrage génie civil
2 : collecteur d'assainissement amont
3 : collecteur d'assainissement aval
4 : caniveau central
5 : vanne de sectionnement by-pass
6 : conduit de détournement de l'écoulement
7 : vanne de sectionnement du collecteur amont
8 : ouverture du piège à charriage
9 : panneau de couverture du piège à charriage
10 : casiers
11 : sens de circulation des eaux dans le conduit de détournement de l'écoulement
12 : vanne de sectionnement du collecteur aval
13 : fosse de stockage du piège à charriage
14 : anneaux de levage des casiers
15 : glissières de guidage des casiers
16 : sens de circulation des eaux usées dans les casiers
17 : volet de régulation
18 : glissière du volet de régulation
19 : direction de circulation du volet de régulation
20 : masque hydromécanique
21 : axe de rotation du masque hydromécanique
22 : sens de pivotement du masque hydromécanique
23 : lest
24 : barres de raccordement entre le volet de régulation et le masque hydromécanique
25 : volet basculant de la vanne de délestage
26 : sens de pivotement du volet de la vanne de délestage
27 : butée d'appui à l'ouverture
28 : axe de rotation de la vanne de délestage
29 : support
30 : ressort d'amortissement
31 : aimant
32 : butée de fermeture
33 : membrane aimantée
34 : encadrement
35 : Volet de fermeture partielle des casiers
36 : trappe d'accès

## Revendications

1. Dispositif de retenue de déchets solides d'un réseau de collecte d'eaux usées, comprenant une chambre technique (1) équipée d'un caniveau central (4) connecté fluidiquement à un collecteur d'assainissement amont (2) et comprenant au moins un casier amovible (10) muni d'au moins un tamis, le casier amovible(10) étant disposé de manière à filtrer des eaux usées provenant du caniveau central (4) et passant à travers les mailles du tamis, les déchets solides restant retenus à l'intérieur du casier (10).

2. Dispositif de retenue selon la revendication 1, dans lequel le tamis du casier (10) est réalisé avec des matériaux résistants à la corrosion et à l'abrasion ainsi qu'à la poussée de l'eau et dont la maille est adaptée aux dimensions des déchets solides à piéger, de préférence en tôle perforée, en grillage, ou en filets souples.

3. Dispositif de retenue selon l'une quelconque des revendications précédentes, dans lequel le casier (10) est amovible, positionné dans des glissières de guidage (15) et comprend des anneaux de levage (14) placés sur le casier (10) de manière à pouvoir le manipuler.

4. Dispositif de retenue selon l'une quelconque des revendications précédentes, comprenant une vanne de délestage à axe horizontal comprenant un volet basculant (25) configuré pour laisser passer des eaux usées sans passage par le casier lorsque le niveau d'eau à l'intérieur du dispositif de retenue dépasse une hauteur seuil.

5. Dispositif de retenue selon la revendication précédente, dans lequel le volet basculant (25) comprend des membranes aimantées (33) et des aimants (31) placés sur un encadrement (34) de la vanne de délestage, une force de retenue des membranes aimantées (33) et des aimants (31) étant calculée pour permettre une ouverture de la vanne lorsqu'une poussée hydraulique contre le volet basculant (25) est supérieure à une valeur seuil.

6. Dispositif de retenue selon l'une quelconque des revendications précédentes, comprenant un piège à charriage dimensionné pour emprisonner des impuretés déposées au fond des eaux usées par gravité, par exemple du sable ou du gravier, le piège à charriage comprenant une ouverture (8) munie d'un volet de régulation (17) dont le déplacement entre une position d'ouverture du piège à charriage et une position de fermeture du pièce à charriage est contrôlé par le flux d'eaux usées dans le dispositif de retenue.

7. Dispositif de retenue selon la revendication précédente, dans lequel le volet de régulation (17) est mobile dans des glissières (18) et est relié à un masque hydromécanique (20) dont le déplacement induit un déplacement du volet de régulation (17), le masque hydromécanique (20) étant mobile d'une position de fermeture du pièce à charriage à une position d'ouverture du pièce à charriage par l'intermédiaire d'une poussée hydraulique contre le masque hydromécanique (20) et mobile d'une position d'ouverture du piège à charriage à une position de fermeture du piège à charriage par l'effet d'un lest (23) porté par le masque hydromécanique (20).

8. Dispositif de retenue selon l'une quelconque des revendications précédentes, comprenant un conduit de détournement d'écoulement d'eaux usées (6) comprenant au moins une vanne de sectionnement (5, 7, 12) dimensionnée pour permettre un détournement d'un flux d'eaux usées du caniveau central (4) de manière à empêcher un passage des eaux usées au travers du casier (10).

9. Réseau de collecte d'eaux usées comprenant un dispositif de retenue selon l'une quelconque des revendications précédentes disposé en amont de points d'obstructions ou d'organes choisis parmi une pompe, un dégrilleur et/ou une installation de traitement d'eaux usées.

10. Réseau de collecte d'eaux usées comprenant un dispositif de retenue selon l'une quelconque des revendications précédentes disposé dans un déversoir d'orage.
